# EUROPEAN PATENT SPECIFICATION

(11) **EP 3 217 143 B1**
(45) Date of publication and mention of the grant of the patent: **15.08.2018**
(21) Application number: 17153737.6
(22) Date of filing: 30.01.2017
(51) Int. Cl.: G01B 1/00, G01B 5/012

(54) **STYLUS AND MEASUREMENT METHOD**
TASTSTIFT UND MESSVERFAHREN
STYLET ET PROCÉDÉ DE MESURE

(30) Priority: 08.03.2016 JP 2016044843
(43) Date of publication of application: 13.09.2017
(73) Proprietor: Panasonic Intellectual Property Management Co., Ltd., Osaka-shi, Osaka 540-6207 (JP)
(72) Inventor: KUBO, Masahiro, Osaka 540-6207 (JP); TAKASU, Yoshifumi, Osaka 540-6207 (JP)
(74) Representative: Vigand, Philippe

(56) References cited:
- WO-A1-2013/123927
- GB-A- 2 243 688
- US-A1- 2002 183 964

## Description

### BACKGROUND

### 1. Technical Field

The present disclosure relates to a stylus and a measurement method for measuring a three-dimensional shape of an object to be measured by using the stylus.

### 2. Description of the Related Art

A spherical portion made of a single crystal diamond is formed in a tip of the stylus in the related art. A three-dimensional shape of the object to be measured by using the spherical portion is measured (for example, US 2002/0183964 A1 or Japanese Patent No. 4794753).

### SUMMARY

However, in the above-described related art, it is hard to secure reliability of the stylus over a long period of times.

An object of the disclosure is to provide a stylus and a measurement method capable of securing high reliability over a long period of times.

According to the invention, there is a provided a stylus according to claim 1 that includes a shaft; a protrusion of a single crystal diamond disposed in a tip of the shaft; and a spherical portion of the single crystal diamond disposed in a tip of the protrusion. In the stylus, a {100} plane of the single crystal diamond is disposed in a top tip of the spherical portion, and the protrusion includes a {111} plane of the single crystal diamond and a {110} plane of the single crystal diamond distributed within an annular region on a side of the shaft rather than the spherical portion, and the {110} plane and the {111} plane protrude within the annular region.

As described above, according to one aspect of the disclosure, in the stylus according to claim 1 and the measurement method according to claim 5, it is possible to suppress wear of the single crystal diamond and perform an accurate measurement with a long life at the time of performing a three-dimensional shape measurement on an object to be measured by using the stylus.

### BRIEF DESCRIPTION OF THE DRAWINGS

FIG. 1 is a diagram for explaining a shape of a stylus manufactured in an embodiment;
FIG. 2 is a diagram for explaining a crystal plane of a single crystal diamond used in the embodiment;
FIG. 3 is a perspective view for explaining disposition of a manufacturing device and a stylus used in the embodiment;
FIG. 4 is a top view for explaining positions of a cast mold plate and a stylus in a first manufacturing process of the embodiment;
FIG. 5 is a top view for explaining positions of a cast mold plate and a stylus in a second manufacturing process of the embodiment; and
FIG. 6 is a diagram showing a shape measurement result of a spherical portion and a protrusion of the stylus manufactured in the embodiment.

### DETAILED DESCRIPTION

### Knowledge that became Basis of Present Disclosure

When a single crystal diamond is used in a tip of a stylus, since there is hardness difference in a crystal plane, a study is required for disposition of the crystal plane. However, in the related art, there is no recognition with respect to the problem of the hardness difference, and no consideration is also given to the disposition of the crystal plane.

Therefore, when a measurement is performed by a tip of a stylus being in contact with an object to be measured, only a {100} plane having lower hardness than a {111} plane or a {110} plane among the tips wears first, and thus there is a possibility that the accuracy of the tip is deviated and deteriorated.

As a result of intensive studies, the inventors of the embodiment have realized a stylus and a measurement method capable of securing high reliability over a long period of times, by reducing a possibility to be generated deviated wear based on an optimum disposition on a crystal plane of the tip according to the hardness of the crystal plane.

### Embodiment

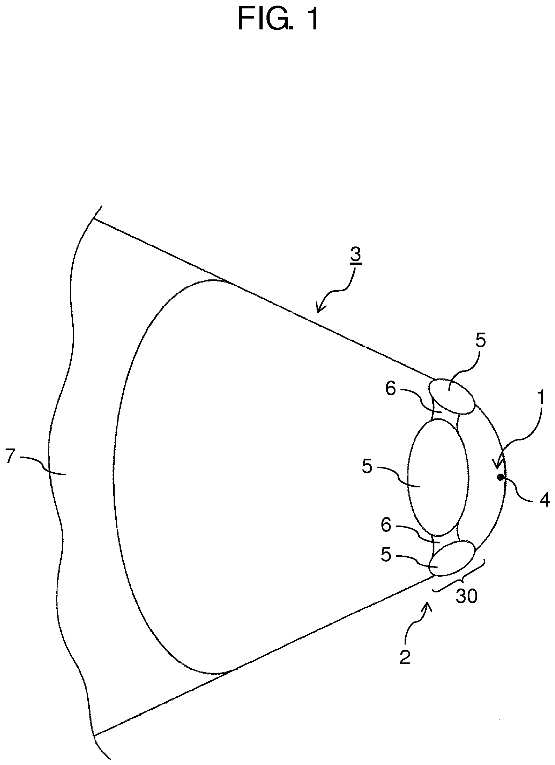

Hereinafter, an embodiment will be described with reference to FIG. 1 to FIG. 6.

FIG. 1 is a diagram for explaining a shape of stylus 3 manufactured in the embodiment. Stylus 3 includes shaft 7, spherical portion 1 disposed in a tip of shaft 7 and made of a single crystal diamond as a material, and protrusion 2 disposed in annular region 30 between shaft 7 and spherical portion 1, and made of the single crystal diamond as a material. In stylus 3, spherical portion 1, or spherical portion 1 and protrusion 2 come into contact with a plane to be measured of an object to be measured such that a three-dimensional measurement of the object to be measured is performed.

Spherical portion 1 is a spherical plane of which a top tip is configured by {100} plane 4 of the single crystal diamond (hereinafter, simply referred to as {100} plane 4). Protrusion 2 is disposed in annular region 30 disposed on a shaft 7 side rather than spherical portion 1 and disposed adjacent to a periphery of a shaft side end edge of spherical portion 1. {111} plane 5 of the single crystal diamond (hereinafter, simply referred to as {111} plane 5) and {110} plane 6 of the single crystal diamond (hereinafter, simply referred to as {110} plane 6) as protrusion 2 are distributed in annular region 30. As an example, in annular region 30, {111} plane 5 and {110} plane 6 as protrusion 2 are alternately disposed. These planes of {111} plane 5 and {110} plane 6 protrude from a surface of spherical portion 1, and thereby configure protrusion 2. Here, {100}, {111}, and {110} are miller indices indicating the crystal plane of the single crystal diamond.

As an example, spherical portion 1 and protrusion 2 are configured by one single crystal diamond material. In addition, as an example, the single crystal diamond material is brazed to a tip of shaft 7 made of a cemented carbide of stylus 3. As an example, the tip of shaft 7 is a tapered shape with an angle of 30°, and a columnar shaft shape portion having a diameter Φ of 1.0 mm (not shown) is connected to a rear side (left side in FIG. 1) of a tip of the tapered shape.

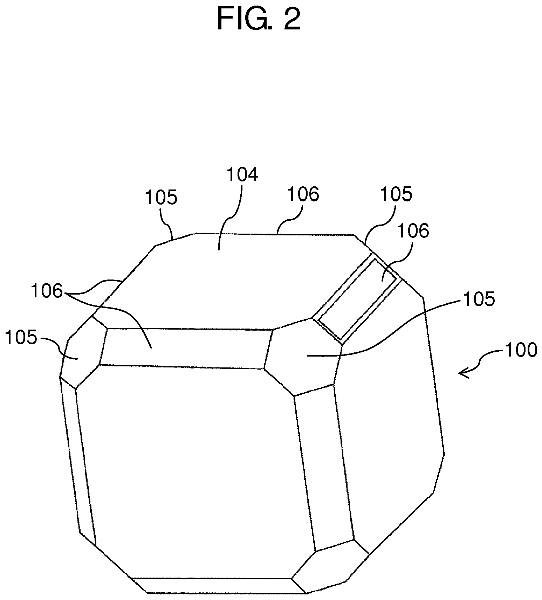

FIG. 2 is a diagram for explaining the crystal plane in single crystal diamond 100 used in the embodiment. Specifically, FIG. 2 is a diagram showing a crystal plane in one single crystal diamond 100 configuring spherical portion 1 and protrusion 2, before manufacturing as stylus 3. In single crystal diamond 100 of FIG. 2, in a case where {100} plane 104 of the single crystal diamond (hereinafter, simply referred to as {100} plane 104) is disposed on an upper part that is a position corresponding to the top tip of spherical portion 1, {111} planes 105 of the single crystal diamond (hereinafter, simply referred to as {111} plane 105) are disposed at positions of a rotation angle 45° in a vertical direction and a rotation angle 45° in a horizontal direction with respect to {100} plane 104 at a position corresponding to protrusion 2 of annular region 30. In addition, {110} planes 106 of the single crystal diamond (hereinafter, simply referred to as {110} plane 106) as protrusion 2 are disposed at a rotation angle 45° in a vertical direction and in a direction connecting adjacent {111} planes 105 with respect to {100} plane 104.

In this manner, when a measurement is performed by coming stylus 3 into contact with the plane to be measured of the object to be measured by providing protrusion 2 in a plurality of {111} planes 105 and a plurality of {110} planes 106, even if a slight wear occurs at the softest {100} plane 104 after wearing, the contact is performed in at least one of {111} plane 105 and {110} plane 106 harder than {100} plane 104 before {100} plane 104. Therefore, it is possible to suppress wear greater than permissible wear in {100} plane 104, and measure an accurate shape over a long period of times.

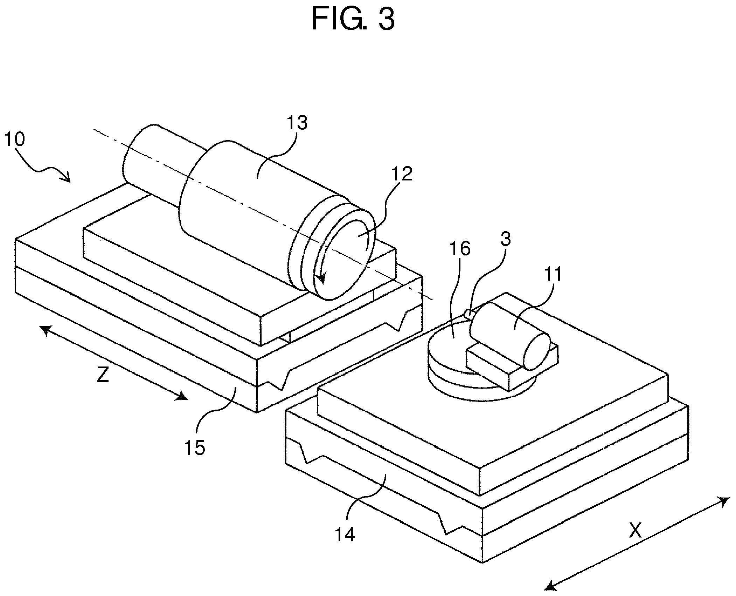

Here, a manufacturing method of stylus 3 will be described. FIG. 3 is a perspective view for explaining disposition of a manufacturing device and stylus 3 used in the embodiment. As shown in FIG. 3, manufacturing device 10 for manufacturing stylus 3 in the embodiment includes X direction drive stage 14 and Z direction drive stage 15. Rotary stage 16 is provided on X direction drive stage 14, and positioning spindle 11 which can determine a rotation position of stylus 3 at a certain angle is disposed on rotary stage 16. In addition, main shaft spindle 13 for rotating cast mold plate 12 made of the cast iron on Z direction drive stage 15 is disposed to face positioning spindle 11. Z direction drive stage 15 and rotary stage 16 of manufacturing device 10 can be individually driven.

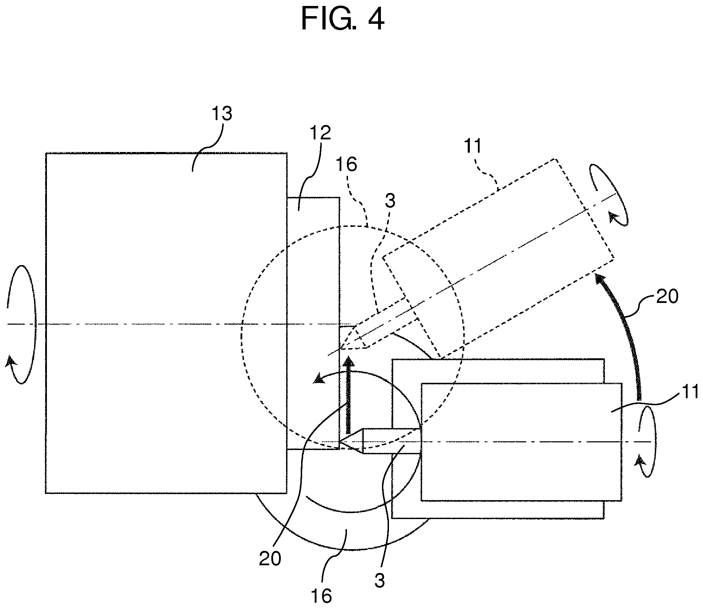

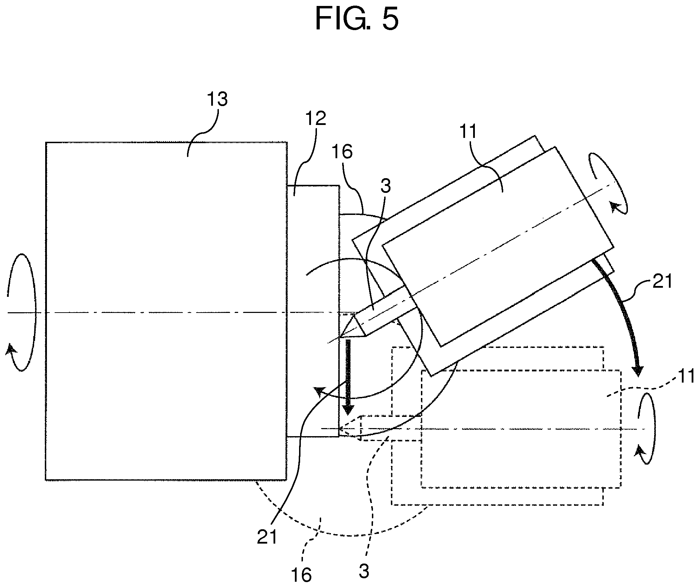

The manufacturing method of stylus 3 includes a first manufacturing process and a second manufacturing process. FIG. 4 is a top view for explaining positions of cast mold plate 12 and stylus 3 in the first manufacturing process of the embodiment. Specifically, FIG. 4 is a top view showing a position relationship of cast mold plate 12 and stylus 3 of the first manufacturing process in a manufacturing method of stylus 3 in the embodiment. In FIG. 4, stylus manufacturing locus 20 at the time of manufacturing the spherical portion in the first process indicates a movement position of stylus 3 with respect to cast mold plate 12. FIG. 5 is a top view for explaining positions of cast mold plate 12 and stylus 3 in a second manufacturing process of the embodiment. Specifically, FIG. 5 is a top view showing a position relationship of cast mold plate 12 and stylus 3 of the second manufacturing process in the manufacturing method of stylus 3 in the embodiment. In FIG. 5, stylus manufacturing locus 21 at the time of manufacturing the spherical portion in the second process indicates a movement position of stylus 3 with respect to cast mold plate 12.

An example of stylus 3 in the embodiment will be described. In the present embodiment, a shape of stylus 3 to be manufactured implemented as a shape in which spherical portion 1 and protrusion 2 made of the single crystal diamond as a material are provided in the tip of shaft 7 as shown in FIG. 1, and {100} plane 4 is disposed to be an end plane in the top tip of spherical portion 1. Furthermore, {111} planes 5 and {110} planes 6 as protrusion 2 in annular region 30 adjacent to spherical portion 1 protrude to be a protrusion length equal to or less than 0.05 µm, as an amount corresponding to an error component in a case where spherical portion 1 and protrusion 2 are viewed as one spherical shape. The radius of spherical portion 1 is 0.02 mm, and an opening angle from the center axis is 60°. In the embodiment, as cast mold plate 12, a plate, is used, on which planarization processing is performed with a cutting tool of a carbide and diamond sintered body having a cutting edge of R2.0 mm, as a material of the cast iron. In addition, a tip of stylus 3 manufactured in the embodiment, is used, in which a single crystal diamond tip is attached to shaft 7 made of a cemented carbide having a diameter of 1.0 mm, for example, by brazing, and the single crystal diamond and shaft 7 on which taper processing is performed as an opening angle of 30° are used.

Next, an example of a manufacturing method of stylus 3 will be described in detail using FIG. 1 to FIG. 5.

In FIG. 3, cast mold plate 12 is rotated at 2,000 rpm in a state where being attached to main shaft spindle 13 of manufacturing device 10. Stylus 3 is attached to positioning spindle 11. In advance, the tip of stylus 3 is disposed in accordance with the center of rotation in rotary stage 16 of manufacturing device 10, and positioned at a center position of rotary stage 16 regardless of a rotation angle of rotary stage 16.

As shown in FIG. 3 and FIG. 4, as the first manufacturing process, X direction drive stage 14 of manufacturing device 10 is driven such that the tip of stylus 3 is moved to a circumferential position of cast mold plate 12. Z direction drive stage 15 of manufacturing device 10 is driven such that the tip of stylus 3 is moved to coordinates at which the tip is in contact with a plane of cast mold plate 12.

While positioning spindle 11 is rotated at a rotation speed of 60 rpm in the clockwise direction, X direction drive stage 14 of manufacturing device 10 is moved to the center direction of cast mold plate 12. At this time, rotary stage 16 of manufacturing device 10 is driven such that stylus 3 is tilted with respect to the center axis of main shaft spindle 13 of manufacturing device 10 at a speed of 0.6° per second. Until an angle of a rotation stage of manufacturing device 10 reaches an angle of {111} plane 5 in protrusion 2 adjacent to spherical portion 1 of stylus 3, grinding is performed while the angle of the rotation stage of manufacturing device 10 gradually tilts with respect to the center axis of main shaft spindle 13.

When reaching an angle of {111} plane 5 in protrusion 2 of stylus 3, a rotation speed of positioning spindle 11 is decreased to 6 rpm and a rotation speed of rotary stage 16 in manufacturing device 10 is decreased to 0.2° per second such that a manufacturing time of {111} plane 5 in protrusion 2 of stylus 3 is increased to be a manufacturing time of 30 times longer than that of {100} plane 4. At this time, during a period during which positioning spindle 11 is rotated such that an angle thereof reaches a rotation angle of {110} plane 6 in protrusion 2 of stylus 3, the rotation speed of positioning spindle 11 is changed to 12 rpm.

When rotary stage 16 of manufacturing device 10 is continuously tilted and an angle thereof passes through the angle of {111} plane 5 in protrusion 2 of stylus 3, the rotation speed of rotary stage 16 is changed to 0.6° per second, and the rotation speed of positioning spindle 11 is changed to 60 rpm.

The grinding is performed while X direction drive stage 14 of manufacturing device 10 is moved in the center direction of cast mold plate 12 until a tilt angle of rotary stage 16 reaches 62°.

As shown in FIG. 5, at a time point at which the tilt angle of rotary stage 16 as the second manufacturing process reaches 62°, a tilt direction of rotary stage 16 is reversed and X direction drive stage 14 of manufacturing device 10 is driven toward an outer peripheral direction of cast mold plate 12. At this time, rotary stage 16 of manufacturing device 10 is driven such that an axis of stylus 3 is tilted with respect to main shaft spindle 13 of manufacturing device 10 at a speed of 0.6° per second. The grinding is performed while the angle of rotation stage of manufacturing device 10 is gradually tilted, until the angle reaches the angle of {111} plane 5 in protrusion 2 of stylus 3.

When reaching the angle of {111} plane 5 in protrusion 2 of stylus 3, the rotation speed of positioning spindle 11 is decreased to 6 rpm, and the rotation speed of rotary stage 16 in manufacturing device 10 is decreased to 0.2° per second such that a manufacturing time of {111} plane 5 in protrusion 2 of stylus 3 is increased to be a manufacturing time of 30 times longer than that of {100} plane 4. At this time, during a period during which positioning spindle 11 is rotated such that an angle thereof reaches a rotation angle of {110} plane 6 in protrusion 2 of stylus 3, the rotation speed of positioning spindle 11 is changed to 12 rpm.

When rotary stage 16 of manufacturing device 10 is continuously tilted toward 0° and an angle thereof passes through the angle of {111} plane 5 in protrusion 2 of stylus 3, the rotation speed of rotary stage 16 is changed to 0.6° per second, and the rotation speed of positioning spindle 11 is changed to 60 rpm.

The grinding is performed while X direction drive stage 14 of manufacturing device 10 is moved in the outer peripheral direction of cast mold plate 12 until the tilt angle of rotary stage 16 reaches 0°. At a time point at which a slope of rotary stage 16 reaches 0°, Z direction drive stage 15 of manufacturing device 10 is advanced by 0.0002 mm toward cast mold plate 12, and the first manufacturing process and the second manufacturing process are repeated in the top tip of stylus 3 until spherical portion 1 and protrusion 2 are formed.

By performing processing as described above, it is possible to absorb difference in grinding rates caused from differences in hardness by the crystal plane of the single crystal diamond which is material of spherical portion 1 and protrusion 2 of stylus 3, and to provide protrusion 2 with a protrusion length equal to or less than 0.05 µm which is within an error range in a case where spherical portion 1 and protrusion 2 of stylus 3 are viewed as one spherical shape.

Here, a preferable dimensional condition of protrusion 2 will be described. An allowable measurement error accuracy in a measurement machine using stylus 3 is equal to or less than 0.1 µm. In a case where the protrusion length of protrusion 2 is set to be greater than 0.05 µm, when a portion (for example, {100} plane 4) of low hardness in the single crystal diamond of spherical portion 1 comes into contact with the plane to be measured of the object to be measured such that wear of 0.05 µm is generated, the protrusion length deviates from tolerance. Therefore, it is desirable that the protrusion length of protrusion 2 does not exceed 0.05 µm. In addition, when the protrusion length of protrusion 2 is less than 0.02 µm, and when the portion (for example, {100} plane 4) of low hardness in the single crystal diamond of spherical portion 1 is worn by coming into contact with the plane to be measured of the object to be measured, protrusion 2 does not contact the plane to be measured. There is a concern that a period during which a measurement accuracy of stylus 3 can be maintained becomes short by rapidly processing the wear in the portion of low hardness. Accordingly, it is desirable that the protrusion length of protrusion 2 is set to be equal to or greater than 0.02 µm. That is, when a sphere passing through the top tip of spherical portion 1 is defined, it is desirable that {110} plane 6 and {111} plane 5 within annular region 30 protrude as protrusion 2 in a range in which the protrusion length from a surface of the sphere is equal to or greater than 0.02 µm and within 0.05 µm. By such a configuration, it is possible to suppress deterioration of the measurement accuracy to be equal to or less than 0.05 µm by the wear of the single crystal diamond. With this, it is possible to prevent the deterioration of the measurement accuracy due to the wear of the stylus over a long period of times, and to extend service life.

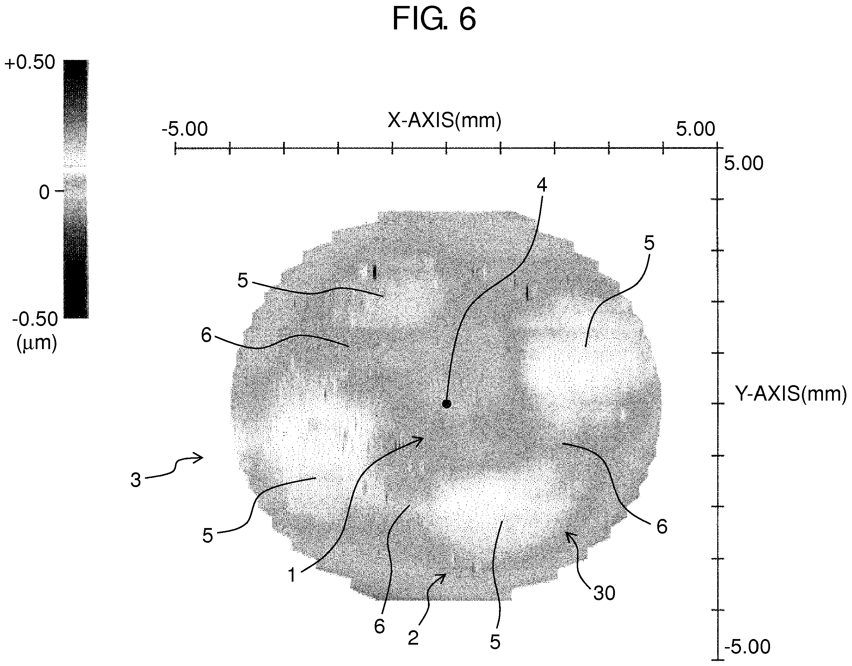

FIG. 6 is a diagram showing a shape measurement result of spherical portion 1 and protrusion 2 of stylus 3 manufactured in the embodiment. Specifically, FIG. 6 is a result obtained by measuring the difference from the spherical shape of spherical portion 1 and protrusion 2 of stylus 3 manufactured by the present manufacturing method. FIG. 6 shows a center axis of stylus 3 that corresponds to the origin of an X axis and Y axis in FIG. 6, and the degree of difference in a shape different from a true spherical shape at each angular position of spherical portion 1. As shown in FIG. 6, protrusion 2 in which {111} plane 5 and {110} plane 6 of stylus 3 is higher than other portions is adjacent to spherical portion 1. In this manner, {111} plane 5 and {110} plane 6 as protrusion 2 are alternately and evenly disposed in annular region 30 along an outer periphery of the top tip such that protrusion 2 preferentially comes into contact with the object to be measured when the object to be measured having a slope is measured particularly. Since the hardness of protrusion 2 has a maximum hardness of twice with respect to another portion (for example, {100} plane 4), the wear is hard to occur. As a result, it is possible to suppress the wear of stylus 3, and realize stylus 3 with a long life.

In FIG. 6, the sphere passing through {100} plane 4 that is the top tip of spherical portion 1 is defined and the amount of difference based on the definition is indicated. That is, a spherical cap of the sphere forms {100} plane 4 that is the top tip of spherical portion 1. It is desirable that the radius of the sphere configuring {100} plane 4 is equal to or greater than 5 µm and equal to or less than 20 µm. If the radius of the sphere configuring {100} plane 4 is less than 5 µm, it is not desirable because the protrusion length of protrusion 2 exceeds an allowable measurement difference range in the difference of the true spherical shape. In addition, in a case where the radius of the sphere exceeds 20 µm, since a surface region of a spherical cap portion becomes larger than that of protrusion 2, the effect of wear reduction decreases. Therefore, it is preferable to design the top tip of spherical portion 1 so as to configure the spherical cap of the sphere having a radius of equal to or greater than 5 µm and equal to or less than 20 µm.

In the embodiment, from the tip of spherical portion 1, the manufacturing process is performed. However, from an end portion on a maximum angle side of spherical portion 1, the manufacturing process may be performed.

In the embodiment, as the material of stylus 3, the cemented carbide is used, but other materials may be used.

A three-dimensional shape measurement method that measures a three-dimensional shape of the object to be measured using stylus 3 may be realized. For example, for the first time, {100} plane 4 of spherical portion 1 of stylus 3 comes into contact with the plane to be measured on which the three-dimensional shape of the object to be measured is measured such that a three-dimensional shape measurement is performed. Subsequently, after the wear at {100} plane 4 is generated, one of {111} plane 5 and {110} plane 6 of protrusion 2 comes into contact with the plane to be measured and the measurement is continued. Therefore, it is possible to continue the measurement without further proceeding the wear of {100} plane 4, and it is possible to realize high precision measurement over a long period of times by such a measurement method.

According to the embodiment, as shown in FIG. 1, {111} plane 5 and {110} plane 6 as protrusion 2 are configured to dispose alternately and evenly in annular region 30 along an outer periphery of an end edge on a shaft side of {100} plane 4 in the top tip of spherical portion 1. The hardness of protrusion 2 has a maximum hardness of twice with respect to other portions (for example, {100} plane 4). Therefore, particularly, when the three-dimensional shape of the object to be measured having a slope is measured with this stylus 3, and when the wear is performed at {100} plane 4 of the top tip of spherical portion 1, protrusion 2 can preferentially come into contact with the object to be measured such that the wear is unlikely to occur. As a result, it is possible to realize stylus 3 with a long life by suppressing the wear of stylus 3, and it is possible to accurately measure the three-dimensional shape of the object to be measured over a long period of times.

By combining arbitrary embodiments or modification examples of the various embodiments or modification examples as appropriate, it is possible to achieve the respective effects. In addition, it is possible to combine the embodiments, to combine the embodiment examples, or to combine the embodiment and the embodiment example, and also to combine the features in different embodiments or embodiment examples.

For example, the stylus and the measurement method according to the disclosure can be applied to a stylus and a measurement method which can suppress wear of the single crystal diamond and perform an accurate measurement with a long life at the time of performing the three-dimensional shape measurement on the object to be measured by using the stylus.

## Claims

1. A stylus (1) comprising:
a shaft (7); a protrusion (2) of a single crystal diamond disposed in a tip of the shaft; and
a spherical portion (1) of the single crystal diamond disposed in a tip of the protrusion,
wherein a {100} plane (4) of the single crystal diamond is disposed in a top tip of the spherical portion, and
wherein the protrusion includes a {111} plane (5) of the single crystal diamond and a {110} plane (6) of the single crystal diamond distributed within an annular region on a side of the shaft rather than the spherical portion, and the {110} plane and the {111} plane protrude within the annular region.

2. The stylus of Claim 1,
wherein when the spherical portion and the protrusion are defined as a sphere passing through the top tip of the spherical portion, a protrusion length of the {111} plane and the {110} plane within the annular region is in a range equal to or greater than 0.02 µm and within 0.05 µm from a surface of the sphere.

3. The stylus of Claim 1,
wherein the spherical portion is configured by a spherical cap of the sphere of which a radius is equal to or greater than 5 µm and equal to or less than 20 µm.

4. The stylus of Claim 2,
wherein the spherical portion is configured by a spherical cap of the sphere of which a radius is equal to or greater than 5 µm and equal to or less than 20 µm.

5. A measurement method comprising:
measuring a three-dimensional shape of an object to be measured by using the {100} plane in the spherical portion of the stylus of any one of Claims 1 to 4.

## Patentansprüche

1. Taststift (1), aufweisend:
einen Schaft (7);
einen Vorsprung (2) eines Einkristalldiamanten, der in einer Spitze des Schaftes angeordnet ist; und
einen kugelförmigen Abschnitt (1) des Einkristalldiamanten, der in einer Spitze des Vorsprungs angeordnet ist,
wobei eine {100}-Ebene (4) des Einkristalldiamanten in einer oberen Spitze des kugelförmigen Abschnitts angeordnet ist, und
wobei der Vorsprung eine {111}-Ebene (5) des Einkristalldiamanten aufweist und eine {110}-Ebene (6) des Einkristalldiamanten, verteilt innerhalb eines ringförmigen Bereichs auf einer Seite des Schafts anstatt des kugelförmigen Abschnitts, und die {110}-Ebene und die {111}-Ebene innerhalb des ringförmigen Bereichs vorstehen.

2. Taststift nach Anspruch 1,
wobei, wenn der kugelförmige Abschnitt und der Vorsprung als eine Kugel definiert sind, die durch die obere Spitze des kugelförmigen Abschnitts verläuft, eine Vorsprungslänge der {111}-Ebene und der {110}-Ebene innerhalb des ringförmigen Bereichs in einem Bereich liegt, der gleich groß wie oder größer als 0,02 µm ist und innerhalb von 0,05 µm von einer Oberfläche der Kugel entfernt ist.

3. Taststift nach Anspruch 1,
wobei der kugelförmige Abschnitt durch eine kugelförmige Kappe der Kugel gebildet ist, deren Radius gleich groß wie oder größer als 5 µm ist und gleich groß wie oder kleiner als 20 µm ist.

4. Taststift nach Anspruch 2,
wobei der kugelförmige Abschnitt durch eine kugelförmige Kappe der Kugel gebildet ist, deren Radius gleich groß wie oder größer als 5 µm ist und gleich groß wie oder kleiner als 20 µm ist.

5. Messverfahren, umfassend:
Messen einer dreidimensionalen Form eines zu messenden Objekts unter Verwenden der {100}-Ebene in dem kugelförmigen Abschnitt des Taststifts nach einem der Ansprüche 1 bis 4.

## Revendications

1. Stylet (1) comprenant :
un axe (7) ;
une saillie (2) en diamant monocristallin disposée dans une extrémité de l'axe ; et
une partie sphérique (1) du diamant monocristallin disposée dans une extrémité de la saillie,
dans lequel un {100} plan (4) du diamant monocristallin est disposé dans une extrémité supérieure de la partie sphérique, et
dans lequel la saillie comprend un {111} plan (5) du diamant monocristallin et un {110} plan (6) du diamant monocristallin répartis dans une zone annulaire sur un côté de l'axe plutôt que la partie sphérique, et le {110} plan et le {111} plan dépassent dans la zone annulaire.

2. Stylet selon la revendication 1,
dans lequel, lorsque la partie sphérique et la saillie sont définies comme une sphère passant par l'extrémité supérieure de la partie sphérique, une longueur de saillie du {111} plan et du {110} plan dans la zone annulaire est égale ou supérieure à 0,02 µm et se trouve à 0,05 µm d'une surface de la sphère.

3. Stylet selon la revendication 1,
dans lequel la partie sphérique est configurée par un embout sphérique de la sphère dont un rayon est égal ou supérieur à 5 µm et égal ou inférieur à 20 µm.

4. Stylet selon la revendication 2,
dans lequel la partie sphérique est configurée par un embout sphérique de la sphère dont un rayon est égal ou supérieur à 5 µm et égal ou inférieur à 20 µm.

5. Procédé de mesure comprenant :
la mesure d'une forme en trois dimensions d'un objet à mesurer en utilisant le {110] plan dans la partie sphérique du stylet selon l'une quelconque des revendications 1 à 4.
